**Europäisches Patentamt**

**European Patent Office**

**Office européen des brevets**

(11) Numéro de publication : **0 459 338 B1**

(12) **FASCICULE DE BREVET EUROPEEN**

(45) Date de publication du fascicule du brevet :
**06.12.95 Bulletin 95/49**

(51) Int. Cl.⁶ : **H04Q 7/38, H04M 1/72**

(21) Numéro de dépôt : **91108558.7**

(22) Date de dépôt : **27.05.91**

(54) **Procédé de scrutation d'une pluralité de canaux radio par une borne d'un réseau de téléphonie sans fil.**

(30) Priorité : **30.05.90 FR 9006709**

(43) Date de publication de la demande :
**04.12.91 Bulletin 91/49**

(45) Mention de la délivrance du brevet :
**06.12.95 Bulletin 95/49**

(84) Etats contractants désignés :
**AT BE CH DE DK ES FR GB IT LI NL SE**

(56) Documents cités :
**EP-A- 0 212 761
WO-A-83/02380
FR-A- 2 414 274**

(56) Documents cités :
**TECHNISCHE RUNDSCHAU vol. 81, no. 51, 22
Décembre 1989, BERNE (CH) pages 36 -38; H.
OCHSNER: 'Schnurlose Telekommunication
am Arbeidssplatz Das Telefoon nabelt sich ab'**

(73) Titulaire : **ALCATEL CIT
12 Rue de la Baume
F-75008 Paris (FR)**

(72) Inventeur : **Joubert, Jean-Louis
163, avenue Charles de Gaulle
F-92200 Neuilly (FR)**

(74) Mandataire : **Weinmiller, Jürgen et al
Lennéstrasse 9
Postfach 24
D-82336 Feldafing (DE)**

Il est rappelé que : Dans un délai de neuf mois à compter de la date de publication de la mention de la délivrance du brevet européen toute personne peut faire opposition au brevet européen délivré, auprès de l'Office européen des brevets. L'opposition doit être formée par écrit et motivée. Elle n'est réputée formée qu'après paiement de la taxe d'opposition (Art. 99(1) Convention sur le brevet européen).

## Description

L'invention concerne un procédé de scrutation d'une pluralité de canaux radio par une borne d'un réseau de téléphonie sans fil. Un tel réseau comporte une pluralité de bornes fixes qui permettent à des abonnés d'établir des communications téléphoniques avec un réseau public commuté classique, au moyen de postes téléphoniques portables, qui communiquent avec les bornes par des canaux radio. La portée des bornes est courte, et il n'y a pas de transfert automatique d'une communication, d'une borne à une autre.

Pour établir une communication, l'utilisateur d'un poste téléphonique portable vient à proximité d'une borne fixe, dans un rayon de l'ordre de 100 ou 200 mètres. Chaque borne dispose de 40 canaux radio, par exemple, qui sont les mêmes pour toutes les bornes et chaque borne peut utiliser n'importe lequel des 40 canaux. Ceci évite d'affecter des canaux spécifiques à chaque borne. En revanche, certains conflits sont susceptibles de perturber le fonctionnement des bornes.

Lorsque l'utilisateur d'un poste téléphonique portable entreprend d'établir une communication, le poste téléphonique scrute automatiquement les 40 canaux radio en accordant son récepteur sur chacun de ces canaux successivement, pour trouver un canal disponible. Il accorde alors son émetteur sur ce canal et émet une suite de trames numériques, spécifiques d'un appel. De son côté, chaque borne fixe scrute en permanence les 40 canaux, en distinguant les trames spécifiques d'un appel et les trames correspondant à une communication établie. Lorsqu'une borne reconnaît les trames spécifiques d'un appel, elle établit une communication avec le poste téléphonique sur ce même canal, car celui-ci est utilisé alternativement dans les deux sens.

Lorsqu'une seule borne est capable de capter un appel, il ne peut y avoir de conflit, et la communication avec la borne est établie dans un délai inférieur ou égal à 600 millisecondes, si chaque canal est scruté pendant un intervalle de temps élémentaire de 15 millisecondes.

Lorsque plusieurs bornes sont situées à proximité du poste téléphonique portable qui lance un appel, plusieurs sont susceptibles de capter cet appel et de répondre simultanément sur le canal radio utilisé pour cet appel. Classiquement, toutes les bornes scrutent chaque canal pendant des intervalles de temps ayant une durée fixée identique pour toutes les bornes, mais sans synchronisme entre les scrutations par différentes bornes. Généralement les scrutations ne sont donc pas synchrones. La période de scrutation des 40 canaux est la même pour toutes les bornes, mais les scrutations sont décalées d'une borne à une autre d'un intervalle de temps quelconque. Dans ce cas, c'est la borne ayant répondu la première à un appel, qui établit une communication et met donc fin à cet appel avant que les bornes voisines ne l'aient capté au cours de leurs scrutations respectives. Dans ce cas, il n'y a pas de conflit entre les bornes. Quand la communication a été établie, la trame numérique transmise dans les deux sens a une structure différente de celle de la trame spécifique à un appel. Cette structure indique aux autres bornes que le canal est occupé par une communication établie.

Mais il peut arriver que les scrutations de deux bornes voisines soient en synchronisme accidentellement, pendant une durée relativement longue, jusqu'à que la dérive des périodes de scrutation arrive à supprimer le synchronisme. Si deux bornes qui scrutent les canaux selon un même ordre et en synchronisme, captent simultanément un appel émis à proximité de ces deux bornes, elles tentent simultanément d'établir une communication sur ce canal. L'interférence des émissions des deux bornes sur ce même canal perturbe la réception par le poste téléphonique portable, de motifs de synchronisation qui sont émis par les bornes. Le poste téléphonique détecte un taux d'erreur élevé dans les motifs de synchronisation qu'il reçoit. Il cesse d'émettre sur le canal considéré et recherche un autre canal disponible.

Il émet un nouvel appel sur cet autre canal, mais cet appel va être de nouveau capté simultanément par les deux bornes puisqu'elles suivent le même ordre de scrutation des canaux et sont encore en synchronisme. Ce conflit peut persister longtemps si la dérive des périodes de scrutation des deux bornes est lente. Pendant ce conflit, l'utilisateur attend vainement l'établissement de sa communication.

Pour remédier à ce problème, un premier procédé envisageable consiste à synchroniser les scrutations de toutes les bornes d'une même zone, au moyen d'un câble reliant ces bornes et transmettant des impulsions de synchronisation, au rythme de scrutation des canaux; et à imposer à chaque borne un décalage systématique de sa période de scrutation par rapport à celle des bornes voisines, tout en conservant la même période de scrutation pour toutes les bornes. Ce procédé a pour inconvénient de nécessiter l'installation d'un câble pour distribuer ces impulsions de synchronisation à toutes les bornes d'une zone. En outre ce procédé devient complètement inopérant en cas de panne de l'équipement produisant les impulsions de synchronisation.

Un autre procédé envisageable consiste à scruter les canaux dans un ordre aléatoire différent pour chacune des bornes, de telle sorte que la probabilité de scruter un même canal par deux bornes voisines n'est que de $\frac{1}{40}$. D'autre part, cette synchronisation accidentelle ne dure que pendant la scrutation d'un seul canal.

Ce procédé présente l'inconvénient de compliquer le dispositif commandant la scrutation dans chaque borne, et surtout complique la réalisation des synthétiseurs de fréquence équipant les bornes, car il est plus difficile de réaliser des synthétiseurs de fréquences permettant de sauter rapidement d'un canal quelconque à un autre quelconque, plutôt que des synthétiseurs réalisant un balayage linéaire alternativement croissant et décroissant en fréquence. FR-A-2 414 274 décrit un procédé de scrutation des canaux radio, dans un ordre différent pour chaque station mobile, dans un système de radiotéléphone.

Le but de l'invention est de proposer un procédé plus simple à mettre en oeuvre que les deux procédés mentionnés ci-dessus, et qui permette d'éviter qu'un conflit entre deux bornes dure plus que la durée d'une période de scrutation de l'ensemble des 40 canaux par une borne.

Selon l'invention, un procédé de scrutation d'une pluralité de canaux radio par une borne d'un réseau de téléphonie sans fil, ce réseau comportant une pluralité de bornes fixes reliées à un réseau public commuté, ces bornes scrutant des canaux radio identiques pour toutes les bornes, pour capter des appels émis par des postes téléphoniques portables, chaque canal étant scruté par chaque borne pendant des intervalles de temps ayant une durée fixée identique pour toutes les bornes;

est caractérisé en ce que, pour éviter que deux bornes voisines puissent scruter simultanément un même canal pendant plusieurs périodes de scrutation consécutives, il consiste à attribuer à chaque borne une période de scrutation différente des périodes de scrutation de toutes les bornes voisines.

Le procédé ainsi caractérisé n'empêche pas un conflit mais il empêche qu'un conflit entre deux bornes, puisse durer pendant plus d'une période de scrutation, puisque la période qui suit est forcément décalée dans les deux bornes. La durée du conflit est alors suffisamment faible pour être sans conséquence pour l'utilisateur.

Selon un mode de mise en oeuvre préférentiel, le procédé selon l'invention est caractérisé en ce que la différence de durée entre les périodes de scrutation de deux bornes voisines est constituée par un temps mort entre deux scrutations successives de tous les canaux, ce temps mort ayant une durée égale à un multiple entier de la durée des intervalles de temps pendant lesquels chaque canal est scruté.

Le procédé ainsi caractérisé est particulièrement simple à mettre en oeuvre car la durée du temps mort peut être déterminée par un comptage des impulsions d'une horloge utilisée par ailleurs, pour cadencer la scrutation des canaux.

Selon un mode de mise en oeuvre préférentiel, la durée du temps mort est un paramètre du logiciel commandant chaque borne, ce paramètre étant téléchargé par l'intermédiaire du réseau public commuté auquel est relié la borne. L'attribution de périodes de scrutation différentes à des bornes voisines est alors particulièrement simple puisqu'elle ne nécessite aucune intervention sur le lieu d'installation des bornes, et il n'est pas nécessaire de concevoir un logiciel différent pour chaque borne.

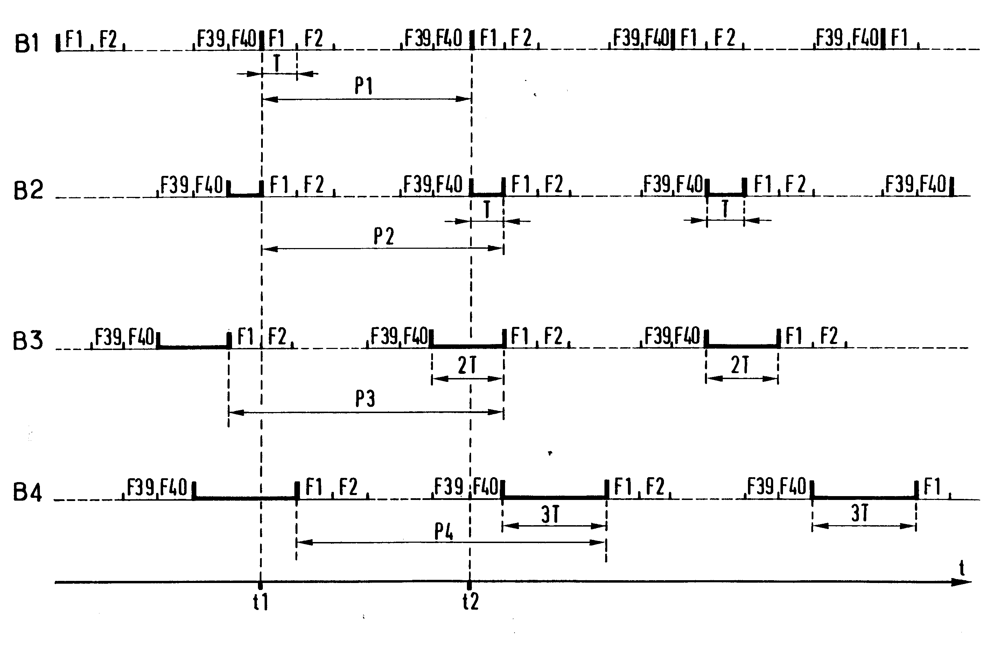

L'invention sera mieux comprise et d'autres détails apparaîtront à l'aide de la description ci-dessous et de la figure l'accompagnant, qui illustre un exemple préférentiel de mise en oeuvre du procédé selon l'invention.

La figure représente plusieurs périodes de scrutation de 40 canaux notés F1, F2,...,F39, F40, par quatre bornes voisines B1, B2, B3, B4. Les canaux F1,...,F40, ne correspondent pas à des fréquences croissantes, cet ordre correspond à une croissance puis à une décroissance des fréquences à balayer, de façon à ne pas faire subir aux synthétiseurs des variations de fréquence importantes entre deux scrutations successives. Chaque borne B1 à B4 scrute chacun de ces canaux successivement pendant des intervalles de temps ayant des durées identiques T= 15 millisecondes, dans l'ordre F1,...,F40. Puis, il y a un temps mort où elle ne scrute aucun canal.

Pour la borne B1, la durée de chaque période de scrutation est P1 = 600 millisecondes, car il y a un temps mort de durée nulle, entre la scrutation du canal F40 à la fin d'une période, et la scrutation du canal F1 au début de la période suivante. La borne B2 scrute les mêmes canaux, dans le même ordre que la borne B1, mais avec une période plus longue, P2 = 615 ms, qui est égale à P1 + T. La borne B3 scrute les mêmes canaux, et dans le même ordre que la borne B1 et que la borne B2, mais avec une période plus longue, P3= 630 ms, qui est égale à P1 + 2T. La borne B4 scrute les mêmes canaux, dans le même ordre que les bornes B1, B2, et B3, mais avec une période plus longue, P4 = 645 ms, qui est égale P1 +3T.

Dans cet exemple, les bornes B1 et B2 sont accidentellement synchrones à un instant t1, alors que les bornes B3 et B4 ne le sont pas. Si un poste téléphonique portable détecte que le canal F1 est disponible à l'instant t1 et émet un appel sur ce canal, en étant suffisamment proche des bornes B1 et B2 pour que celles-ci puissent capter cet appel, ces deux bornes B1 et B2 répondent simultanément sur le canal F1 et sont donc en conflit. La communication ne peut pas être établie pour l'instant. Le poste téléphonique libère le canal F1 et recommence à chercher un canal disponible. Après un certain temps de recherche, il trouve par exemple le canal F2. Il émet son appel sur le canal F2. Pendant ce temps, la scrutation par les bornes a progressé. La borne B1 commence à l'instant t2 une nouvelle période de scrutation en scrutant le canal F1 puis le canal F2. La borne B1 capte alors l'appel émis sur le canal F2. Il n'y a plus de conflit avec la borne B2, car, à l'instant t2, elle n'a pas encore terminé sa période de scrutation, il lui reste un temps mort de durée T, avant de recommencer à scruter les canaux F1 puis F2.

Il est à remarquer que ce procédé ne nécessite aucune synchronisation des bornes entre elles. Dans l'exemple représenté, si on prend l'instant t1 comme référence, les scrutations dans les bornes B1 et B2 démarrent en synchronisme accidentellement, alors que la scrutation dans la borne B3 a déjà démarré et a fini de scruter le canal F1, et alors que la scrutation dans la borne B4 n'a pas encore démarré et démarrera avec un retard T par rapport aux bornes B1 et B2.

Il n'est pas nécessaire que l'ordre de scrutation des canaux soit identique dans toutes les bornes.

Il n'est pas nécessaire non plus que les temps morts aient des durées égales à un multiple entier de la durée T de chaque intervalle de temps correspondant à la scrutation d'un canal. Il suffit que le temps mort qui sépare chaque scrutation ait une différence de durée, par rapport à celui des autres bornes voisines, qui soit suffisante pour que, d'une scrutation à la suivante, une synchronisation accidentelle soit détruite. Le choix de temps morts ayant des durées égales à des multiples entiers de la durée T présente, dans certains cas, l'avantage de simplifier les moyens commandant la scrutation dans chaque borne, puisque la durée du temps mort peut alors être déterminée par un comptage d'impulsions d'une horloge cadençant la scrutation des canaux.

Dans chaque borne, la scrutation peut être commandée par un microprocesseur. La réalisation de son logiciel est à la portée de l'homme de l'art. Il n'est pas nécessaire de concevoir un logiciel différent pour chaque borne. La durée du temps mort peut être un paramètre du logiciel, et ce paramètre peut être téléchargé par l'intermédiaire du réseau public commuté auquel chaque borne est reliée, parmi d'autres paramètres téléchargés dans la borne lors de sa mise en service. Il est à la portée de l'homme de l'art de concevoir un logiciel dont une partie est téléchargeable, cette partie comportant notamment des paramètres.

Si des bornes voisines sont installées par des exploitants différents, ceux-ci doivent se mettre d'accord pour que les durées des temps morts, attribuées à des bornes voisines, soient différentes pour chaque borne.

**Revendications**

1. Procédé de scrutation d'une pluralité de canaux radio par une borne d'un réseau de téléphonie sans fil, ce réseau comportant une pluralité de bornes fixe (B1,...,B4) reliées à un réseau public commuté, ces bornes scrutant des canaux radio (F1,...,F40) identiques pour toutes les bornes, pour capter des appels émis par des postes téléphoniques portables, chaque canal étant scruté par chaque borne pendant des intervalles de temps ayant une durée fixée (T) identique pour toutes les bornes;

caractérisé en ce que, pour éviter que deux bornes voisines (B1, B2) puisse scruter simultanément un même canal (F1) pendant plusieurs périodes de scrutation de l'ensemble des canaux consécutives, il consiste à attribuer à chaque borne (B1,...,B4) une période de scrutation (P1, P2, P3, P4) différente des périodes de scrutation de toutes les bornes voisines.

2. Procédé selon la revendication 1, caractérisé en ce que la différence de durée entre les périodes de scrutation de deux bornes voisines est constituée par un temps mort entre deux scrutations successives de tous les canaux (F1,..., F40) ce temps mort ayant une durée (T, 2T, 3T) égale à un multiple entier de la durée (T) des intervalles de temps pendant lesquels chaque canal est scruté.

3. Procédé selon la revendication 1, caractérisé en ce que la valeur de la différence de durée est un paramètre téléchargeable dans le logiciel de chaque borne, et en ce que, pour attribuer à chaque borne une période de scrutation, il consiste à télécharger une valeur de différence de durée, dans cette borne, via le réseau public commuté.

**Patentansprüche**

1. Verfahren zur Abfrage mehrerer Funkkanäle durch eine Feststation eines Mobiltelefonnetzes, das zahlreiche Feststationen (B1, .. B4) besitzt, die an das öffentliche Fernsprechnetz angeschlossen sind und die für alle Feststationen gleiche Funkkanäle (F1, .. F40) abfragen, um von Mobilfernsprechern ausgesendete Rufsignale aufzufangen, wobei jeder Kanal durch jede Feststation während Zeitintervallen mit einer festen Dauer (T) abgefragt wird, die für alle Feststationen dieselbe ist, dadurch gekennzeichnet, daß zur Vermeidung einer gleichzeitigen Abfrage eines gleichen Kanals (F1) durch zwei benachbarte Feststationen (B1, B2) während mehrerer aufeinanderfolgender Perioden der Abfrage aller Kanäle das Verfahren darin besteht, jeder Feststation (B1, .. B4) eine Abfrageperiode (P1, P2, P3, P4) zuzuweisen, die sich von den Abfrageperioden aller benachbarter Feststationen unterscheidet.

2. Verfahren nach Anspruch 1, dadurch gekennzeichnet, daß die Differenz der Dauer zwischen den Abfrageperioden zweier benachbarter Feststationen von einer Totzeit zwischen zwei aufeinanderfolgende Abfragen aller Kanäle (F1, .. F40) gebildet wird, wobei diese Totzeit eine Dauer (T, 2T, 3T) gleich einem ganzzahligen Vielfachen der Dauer (T) der Zeitintervalle ist, während der jeder Kanal abgefragt wird.

3. Verfahren nach Anspruch 1, dadurch gekennzeichnet, daß der Wert dieser Differenz ein Parameter ist, der per Fernsteuerung in die Software jeder Feststation geladen werden kann, und daß bei der Zuweisung einer Abfrageperiode das Verfahren darin besteht, einen Differenzwert in diese Feststation per Fernsteuerung über das öffentliche Fernsprechnetz zu laden.

**Claims**

1. Method of scanning a plurality of radio channels by a fixed station of a cordless telephone network including a plurality of fixed stations (B1, ..., B4) connected to a public switched telephone network, these fixed stations scanning radio channels (F1, ..., F40) which are the same for all fixed stations to pick up call requests sent by portable telephones, each channel being scanned by each fixed station during time intervals having a fixed duration (T) which is the same for all the fixed stations;
   characterised in that, to prevent two nearby fixed stations (B1, B2) scanning the same channel (F1) simultaneously during more than one consecutive period of scanning of all the channels, each fixed station (B1, ..., B4) is assigned a scanning period (P1, P2, P3, P4) different from the scanning periods of all the nearby fixed stations.

2. Method according to claim 1 characterised in that the difference in the duration of the scanning periods of two nearby fixed stations is produced by a dead time between two successive scannings of all the channels (F1, ..., F40), this dead time having a duration (T, 2T, 3T) equal to an integer multiple of the duration (T) of the time intervals during which each channel is scanned.

3. Method according to claim 1 characterised in that the value of the duration difference is a parameter that can be downloaded into the software of each fixed station and in that each fixed station is assigned a scanning period by downloading a duration difference value into that fixed station via the public switched telephone network.

B1  F1,F2  F39,F40  F1,F2  F39,F40  F1,F2  F39,F40  F1,F2  F39,F40  F1
T  P1

B2  F39,F40  F1,F2  F39,F40  F1,F2  F39,F40  F1,F2  F39,F40  F1,F2
T  P2  T

B3  F39,F40  F1,F2  F39,F40  F1,F2  F39,F40  F1,F2  F1,F2
2T  P3  2T

B4  F39,F40  F1,F2  F39,F40  F1,F2  F39,F40  F1
3T  P4  3T

t1  t2  t